# FASCICULE DE BREVET EUROPEEN

(11) **EP 4 556 279 B1**
(45) Date de publication et mention de la délivrance du brevet: **25.11.2026**
(21) Numéro de dépôt: 24207300.5
(22) Date de dépôt: 17.10.2024
(51) Int. Cl.: B60K 15/05

(54) **ELÉMENT DE FINITION PIVOTANT DANS CARROSSERIE DE VÉHICULE AUTOMOBILE**
SCHWENKBARES ABSCHLUSSELEMENT IN EINER KRAFTFAHRZEUGKAROSSERIE
PIVOTABLE FINISHING ELEMENT IN THE BODY OF A MOTOR VEHICLE

(30) Priorité: 17.11.2023 FR 2312606
(43) Date de publication de la demande: 21.05.2025
(73) Titulaire: Stellantis Auto SAS, 78300 Poissy (FR)
(72) Inventeur: BOUDAN, JULIEN, 91210 DRAVEIL (FR); PERON, RODOLPHE, 95220 HERBLAY (FR)
(74) Mandataire: BCIP

(56) Documents cités:
- CN-A- 113 200 009
- KR-B1- 100 930 703
- US-A1- 2020 062 111
- US-B2- 8 382 188

## Description

L'invention traite de la fixation d'un enjoliveur pivotant dans la carrosserie d'un véhicule automobile. L'invention concerne plus précisément une trappe pivotante intégrée dans un panneau extérieur de véhicule automobile. L'invention a pour objet un ensemble avec un panneau extérieur, un support monté pivotant, un élément de finition pour véhicule automobile. L'invention a également pour objet un véhicule automobile.

Le chargement en énergie nécessaire au fonctionnement d'un véhicule automobile s'effectue via une zone dédiée. Cette zone comprend généralement une trappe montée pivotante par rapport à la structure du véhicule automobile, et donc par rapport à sa carrosserie. Ceci permet d'obtenir de l'énergie par l'extérieur ; ce qui répond à des exigences de confort, d'ergonomie, de sécurité. L'apport en énergie s'effectue par un branchement électrique, par un écoulement de carburant liquide ou gazeux. Les véhicules automobiles de type hybride combinent plusieurs énergies de différentes natures.

La trappe à énergie est intégrée dans la carrosserie en respectant des jeux mécaniques réduits afin de préserver la qualité perçue. Toujours dans une optique de qualité perçue, la trappe est généralement habillée par un élément de finition. Un tel élément de finition comprend une plaque similaire à la carrosserie, un sigle, ou encore un écusson. L'élément de finition est assemblé sur un support de montage. Ce dernier est monté pivotant par rapport à la structure du véhicule automobile.

Le document CN113200009A décrit une trappe de recharge électrique avec une charnière latérale qui est disposée sur le pare-chocs d'un véhicule automobile électrique. La trappe de recharge comprend un corps de grille, un couvercle rabattable de port de charge et un support. Un creux de montage est formé au milieu du corps de grille. Le couvercle rabattable de port de charge peut être relevé pour être ouvert. Le couvercle rabattable du port de charge comprend une étiquette, une base et un siège de couvercle rabattable. L'étiquette, la base et le siège rabattable sont disposés de manière empilée et sont fixés par des vis. Un arbre rotatif est disposé sur le siège rabattable et est joint bout à bout avec le support par l'intermédiaire d'une charnière. L'espace d'assemblage est réduit, le coût du loquet de verrouillage est réduit. Toutefois, la fixation par vis complexifie l'assemblage puisqu'elle implique la présence d'éléments rapportés, et des opérations de fixation supplémentaires.

Le document KR100930703B1 décrit une trappe à carburant avec une articulation sur le côté. La trappe à carburant présente une peau de couvercle qui se fixe par un système de glissière. La trappe de remplissage de carburant est en deux parties, dont un panneau externe et un panneau interne. Ces panneaux sont formés de sorte à pouvoir être séparés l'un de l'autre, et également pour être couplés l'un à l'autre. Le panneau interne est pourvu de quatre saillies coulissantes à coupler avec le panneau extérieur. Le panneau extérieur est pourvu de quatre projections de guidage à coupler aux quatre saillies coulissantes.

Pendant l'assemblage, un monteur est susceptible de décaler l'une des projections de guidage par rapport à la saillie coulissante associée. Dès lors, le couplage des surfaces de fixation n'est pas conforme, et la fixation aléatoire. Les panneaux ne sont pas positionnés convenablement l'un par rapport à l'autre. Le panneau externe est susceptible de se détacher et d'être perdu.

L'invention a pour objectif de répondre à au moins un des problèmes ou inconvénients rencontrés dans l'art antérieur. En particulier, l'invention a pour objectif de faciliter l'assemblage d'un élément de finition pivotant intégré dans la carrosserie d'un véhicule automobile. L'invention a également pour objectif d'optimiser l'ergonomie, le maintien, la précision de positionnement, le coût d'un ensemble pour carrosserie de véhicule automobile.

Selon un premier aspect, l'invention propose un ensemble pour carrosserie de véhicule automobile ; l'ensemble comprenant : un panneau extérieur avec une découpe ; un support pivotant par rapport au panneau extérieur ; un élément de finition dans la découpe ; une interface de montage de l'élément de finition sur le support, l'interface de montage présentant un sens de montage de l'élément de finition sur le support, et comprenant un plot avec une fente d'assemblage, et des moyens de rétention configurés pour être insérés dans la fente d'assemblage selon le sens de montage ; remarquable en ce que les moyens de rétention comprennent un rail de guidage avec un premier tronçon s'étendant le long de la fente d'assemblage, et un deuxième tronçon s'étendant au-delà du premier tronçon dans le sens de montage, le deuxième tronçon étant incliné par rapport au premier tronçon afin de guider les moyens de rétention dans la fente d'assemblage lors du montage.

L'invention apporte un rail de guidage en deux parties afin de guider le mouvement d'assemblage. L'inclinaison localisée du rail de guidage apporte une aide pour la mise en correspondance des surfaces fonctionnelles. Ceci limite le risque de mauvais positionnement, et facilite l'opération de montage. Par ailleurs, cette solution préserve les coûts puisque les moyens de guidage, en l'occurrence chaque rail de guidage, sont intégrés dans l'une des entités de l'ensemble.

Préférentiellement, le deuxième tronçon est incliné par rapport au premier tronçon d'un angle d'inclinaison compris entre 3° et 20°.

Préférentiellement, l'angle d'inclinaison est compris entre 5° et 10°.

Préférentiellement, l'élément de finition comprend un plan principal ; la fente d'assemblage étant ouverte parallèlement au plan principal.

Préférentiellement, le plot comprend une rampe faisant saillie dans l'interface de montage et s' étendant jusqu' à la fente d'assemblage.

Préférentiellement, la fente d'assemblage est une première fente d'assemblage ; l'interface de montage comprenant en outre une deuxième fente d'assemblage décalée par rapport à la première fente d'assemblage, transversalement au sens de montage.

Préférentiellement, le rail de guidage comprend un troisième tronçon parallèle au premier tronçon et s'étendant jusqu'à la deuxième fente d'assemblage ; et/ou l'interface de montage comprend en outre une troisième fente d'assemblage alignée par rapport à la première fente d'assemblage selon le sens de montage.

Préférentiellement, les moyens de rétention comprennent une surépaisseur formée sur le premier tronçon, ladite surépaisseur étant dans la fente d'assemblage afin de lier l'élément de finition au support.

Préférentiellement, transversalement au sens de montage, le premier tronçon est entre le deuxième tronçon et la fente d'assemblage.

Préférentiellement, le plot est formé par le support et le rail de guidage est formé par l'élément de finition.

Préférentiellement, le plot et le rail de guidage forment un premier module d'assemblage, l'interface de montage comprenant en outre un deuxième module d'assemblage symétrique au premier module d'assemblage.

Préférentiellement, le support comprend une portion coudée.

Préférentiellement, le deuxième tronçon est incliné par rapport au premier tronçon afin de guider le plot contre le rail de guidage lors du montage.

Préférentiellement, le plot fait saillie perpendiculairement par rapport au plan principal de l'élément de finition.

Préférentiellement, le deuxième tronçon est courbe.

Préférentiellement, la fente d'assemblage comprend un fond destiné à coopérer avec une surépaisseur du rail de guidage afin de l'arrêter.

Préférentiellement, l'ensemble comprend une liaison pivot reliant le support monté au panneau extérieur, le sens de montage est perpendiculaire à un axe de rotation de la liaison pivot.

Préférentiellement, les moyens de rétention sont configurés pour attacher l'élément de finition au support.

Préférentiellement, le sens de montage est un sens d'insertion de l'élément de finition dans le support.

Préférentiellement, l'interface de montage comprend une butée de rétention et une lame élastique configurée de sorte à coopérer avec la butée de rétention, selon le sens de montage ; le premier tronçon est entre le deuxième tronçon et la butée de rétention.

Selon un autre aspect, l'invention propose un ensemble pour carrosserie de véhicule automobile ; l'ensemble comprenant : un panneau extérieur avec une découpe ; un support pivotant par rapport au panneau extérieur ; un élément de finition dans la découpe ; un sens de montage de l'élément de finition sur le support ; le support comprenant un plot avec une fente d'assemblage ; l'élément de finition comprenant des moyens de rétention configurés pour être insérés dans la fente d'assemblage selon le sens de montage ; remarquable en ce que les moyens de rétention comprennent un rail de guidage avec un premier tronçon s'étendant le long de la fente d'assemblage , et un deuxième tronçon s'étendant au-delà du premier tronçon dans le sens de montage, le deuxième tronçon étant incliné par rapport au premier tronçon afin de guider les moyens de rétention dans la fente d'assemblage lors du montage.

Selon un autre aspect, l'invention propose un véhicule automobile comprenant une carrosserie avec un ensemble ; remarquable en ce que l'ensemble est conforme à l'invention.

Préférentiellement, le panneau extérieur forme une peau de pare-chocs.

Préférentiellement, le véhicule automobile comprend une cavité de rechargement recouverte par l'élément de finition.

Préférentiellement, la cavité de rechargement comprend une prise électrique et/ou un orifice de remplissage en carburant.

Préférentiellement, la cavité de rechargement est une zone de réception d'énergie.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.

La figure 1 est une vue de face d'un véhicule automobile selon l'invention.

La figure 2 est une vue isométrique d'un ensemble pour carrosserie de véhicule automobile selon l'invention.

La figure 3 est une vue du dessus d'un élément de finition et d'un support d'un ensemble pour carrosserie de véhicule automobile selon l'invention.

La figure 4 est une vue en plan d'une partie d'un support d'un ensemble pour carrosserie de véhicule automobile selon l'invention.

La figure 5 montre une fente de plot d'un support d'un ensemble pour carrosserie de véhicule automobile selon l'invention.

La figure 6 est une vue en plan d'un élément de finition d'un ensemble pour carrosserie de véhicule automobile selon l'invention.

La figure 7 est une vue isométrique d'un rail de guidage d'un élément de finition d'un ensemble pour carrosserie de véhicule automobile selon l'invention.

Dans la description qui suit, le terme « comprendre » est synonyme de « inclure » et n'est pas limitatif en ce qu'il autorise la présence d'autres éléments dans le véhicule automobile ou l'ensemble auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond généralement à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage, en position fermée de l'ensemble, à moins que le contraire ne soit mentionné explicitement.

Au travers de la description, les différentes figures utilisent les mêmes signes de référence pour désigner des entités identiques ou similaires.

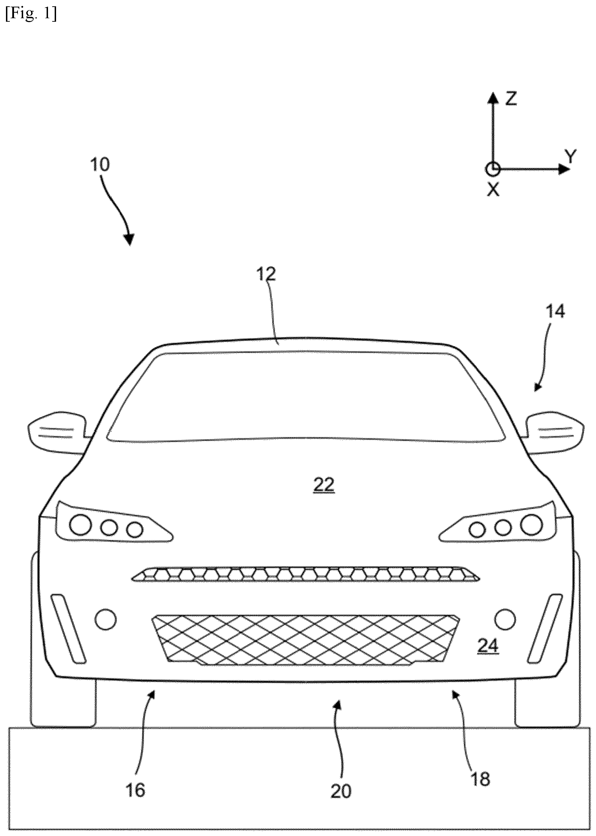

La figure 1 représente un véhicule automobile 10 selon l'invention. Le véhicule automobile 10 comprend des moyens de stockage d'énergie et au moins un moteur (non représenté) adaptés pour entraîner ledit véhicule automobile 10.

Le véhicule automobile 10 comprend une structure 12, également appelée caisse. La structure 12 forme une ossature et supporte différents organes du véhicule automobile 10, dont le moteur et des ouvrants. La structure 12 forme partiellement la carrosserie 14 du véhicule au niveau du toit, des ailes avant, des piliers. La carrosserie 14 forme l'enveloppe externe du véhicule automobile 10. La carrosserie 14 est profilée afin de guider des écoulements d'air.

En façade avant, le véhicule automobile 10 comprend un système de pare-chocs avant 16. Le système de pare-chocs avant 16 comporte un ensemble 18. L'ensemble 18 forme une collection d'entités de la carrosserie 14. Le système de pare-chocs avant 16, en particulier son ensemble 18, est adapté pour résister à des chocs à des vitesses jusqu'à 10 km/h, préférentiellement jusqu'à 15 km/h, sans qu'il n'y ait besoin de remplacer de pièces spécifiques du véhicule. Le système de pare-chocs avant 16 est également adapté pour limiter l'importance des blessures dans l'éventualité d'un choc piéton.

Le système de pare-chocs avant 16 comprend une peau de pare-chocs 20. La peau de pare-chocs 20 forme la carrosserie 14. Elle s'étend jusqu'au capot 22 et jusqu'aux ailes latérales. La peau de pare-chocs 20 englobe des dispositifs lumineux avant, tels des projecteurs. Elle comprend au moins un panneau extérieur 24. La carrosserie 14 peut comprendre d'autres panneaux extérieurs 24, par exemple formant les ailes latérales. Chaque panneau extérieur 24 est généralement lisse. Il présente une surface extérieure continue et/ou homogène. L'ensemble 18 inclue le panneau extérieur 24. Il inclue également un élément de finition et un support sur lequel est monté l'élément de finition.

Le véhicule automobile peut par exemple être un véhicule automobile particulier ou un véhicule automobile utilitaire.

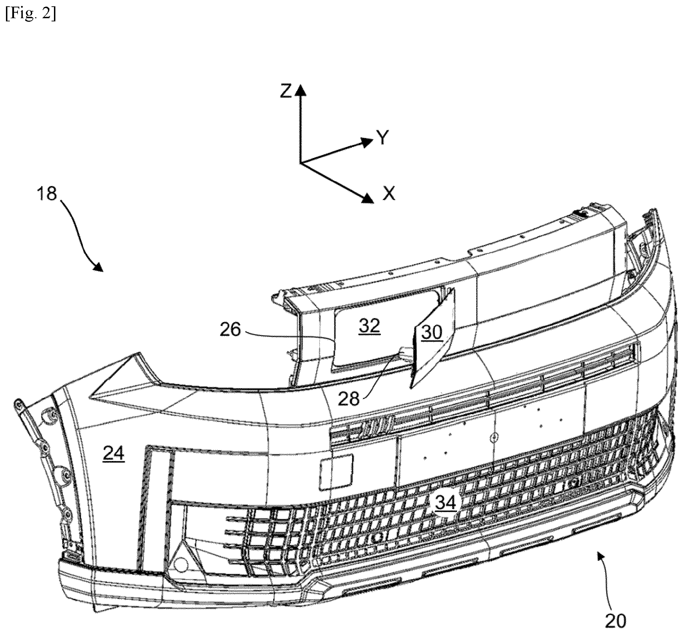

La figure 2 présente un ensemble 18 pour carrosserie de véhicule automobile. Le véhicule automobile peut correspondre à celui présenté en relation avec la figure 1.

L'ensemble 18 comprend : un panneau extérieur 24 avec une découpe 26 ; un support 28 monté pivotant par rapport au panneau extérieur 24. L'ensemble 18 comprend encore un élément de finition 30 dans la découpe 26. La découpe 26 donne accès à une cavité de rechargement 32. Elle forme une ouverture. Elle décrit une boucle fermée. Elle est entourée par le panneau extérieur 24. La cavité de rechargement 32 loge par exemple une prise de rechargement (non représentée). Une telle prise de rechargement est connue en soi de l'homme du métier et ne sera pas détaillée davantage.

Selon une alternative ou une option de l'invention, la cavité de rechargement 32 présente un orifice de remplissage en carburant. Ce dernier communique avec un réservoir de carburant.

Le panneau extérieur 24 est un panneau de peau de pare-chocs 20, en l'occurrence un panneau de peau de pare-chocs avant. Il intègre au moins une grille d'entrée d'air 34. Dans la présente illustration, la grille d'entrée d'air 34 présente un maillage carré ; toutefois tout autre type de maille peut être adopté.

Dans la présente illustration, l'élément de finition 30 est représenté en position ouverte. Il peut être davantage ouvert. Il est également apte à pivoter afin d'être affleurant avec le panneau extérieur 24 ; et donc d'atteindre une position fermée. La présence de l'élément de finition 30 dans la peau de pare-chocs 20 en facilite l'intégration. L'élément de finition 30 est par exemple un enjoliveur. Il peut comprendre un logo. Ainsi, différents logos peuvent être montés sur un même type de support 28.

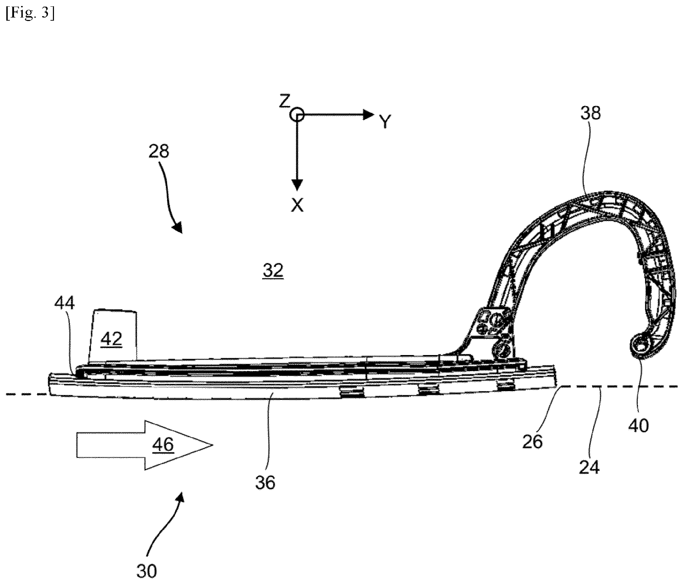

La figure 3 présente un élément de finition 30 tel que monté sur un support 28 pour un ensemble de carrosserie de véhicule automobile. Le véhicule automobile peut correspondre à celui présenté en relation avec l'une des figures 1 à 2. Le panneau extérieur 24 est représenté en pointillés.

La surface extérieure 36 de l'élément de finition 30 forme la carrosserie du véhicule automobile. La surface extérieure 36 est une surface avant. L'élément de finition 30 forme généralement une plaque.

Le support 28 comporte une portion coudée 38. La portion coudée 38 permet de contourner le bord de la découpe 26 lorsque le support 28 est en configuration ouverte. La présence de la portion coudée 38 augmente l'angle d'ouverture maximale, et donc l'accessibilité de la cavité de rechargement 32.

Le support 28 comprend une liaison pivot 40. Le support 28 forme un charnon de charnière. La liaison pivot 40 est destinée à être reliée à la structure du véhicule automobile, par exemple au panneau extérieur 24. Dans le présent mode de réalisation, la liaison pivot 40 présente un axe de rotation vertical. A l'opposé de la portion coudée 38 et/ou de la liaison pivot 40, le support 28 comprend un bossage 42. Le bossage 42 est un bossage interne. Il permet de maintenir le support 28 en position fermée ; en affleurement du panneau extérieur 24.

Le support 28 et l'élément de finition 30 présentent entre eux une interface de montage 44. L'interface de montage 44 est une zone de fixation. Elle présente un sens de montage 46 de l'élément de finition 30 sur le support 28. Le sens de montage 46 est un sens d'insertion, ou un sens d'assemblage. Il est défini dans un repère lié au support 28.

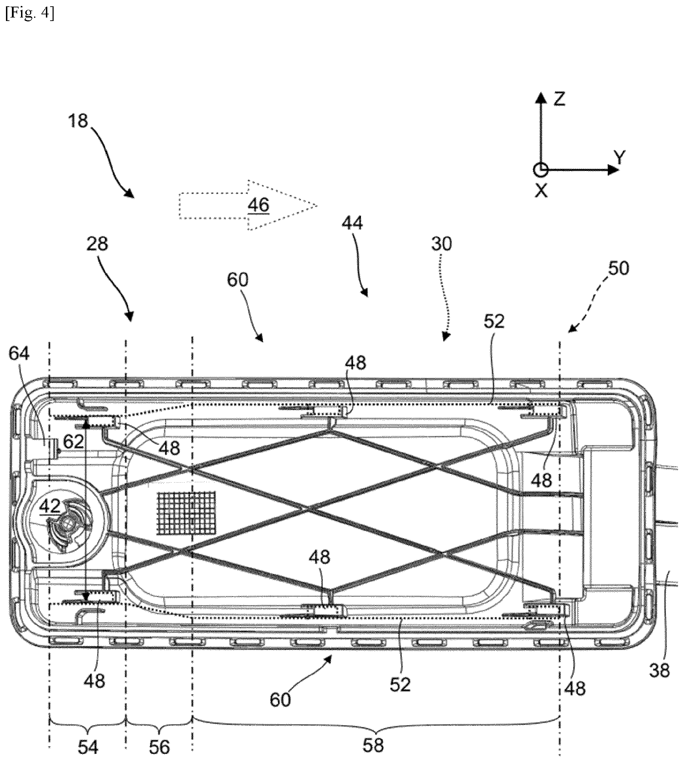

La figure 4 présente partiellement le support 28 d'un ensemble 18 pour carrosserie de véhicule automobile. Le véhicule automobile peut correspondre à celui présenté en relation avec l'une des figures 1 à 3. L'élément de finition 30 est partiellement représenté en pointillés. Le bossage 42 et une partie de la portion coudée 38 sont représentés.

L'interface de montage 44 comprend au moins un plot 48 avec une fente d'assemblage (non représentée). En l'occurrence, l'interface de montage 44 présente six plots 48, chacun avec une fente d'assemblage. Tout autre nombre de plots 48 peut être choisi. Les plots 48 sont répartis sur l'étendue de l'interface de montage 44.

L'interface de montage 44 présente un sens de montage 46 de l'élément de finition 30 sur le support 28. L'interface de montage 44 comprend encore des moyens de rétention 50 configurés pour être insérés dans la ou chaque fente d'assemblage de plot 48 selon le sens de montage 46. Les moyens de rétention 50 sont configurés pour attacher le support 28 et l'élément de finition 30.

Les moyens de rétention 50 comprennent au moins un rail de guidage 52, en l'occurrence deux rails de guidage 52. Les rails de guidage 52 sont généralement parallèles. Ils sont symétriques. Chaque rail de guidage 52 forme un rail de fixation configuré pour fixer l'élément de finition 30 au support 28.

Au moins un ou chaque rail de guidage 52 comporte un premier tronçon 54 s'étendant le long de la fente d'assemblage, et préférentiellement tout le long du plot 48 associé. Le premier tronçon 54 est en contact du plot associé. Au moins un ou chaque rail de guidage 52 comporte également un deuxième tronçon 56 s'étendant au-delà du premier tronçon 54 dans le sens de montage 46. Le deuxième tronçon 56 est incliné par rapport au premier tronçon 54 afin de guider l'élément de finition par rapport au support via le plot 48 lors du montage. Plus généralement, la configuration de rail de guidage 52 permet de guider le plot 48 contre le deuxième tronçon 56 puis le premier tronçon 54 lors de l'accostage de l'élément de finition 30 contre le support 28.

Le rail de guidage 52 comprend un troisième tronçon 58 parallèle au premier tronçon 54. Le deuxième tronçon 56 relie le troisième tronçon 58 au premier tronçon 54. Ainsi le rail de guidage 52 est segmenté et continu.

Chaque rail de guidage 52 et les plots 48 associés audit rail forment un module d'assemblage 60. Ainsi, L'interface de montage 44 présente un premier module d'assemblage et un deuxième module d'assemblage. Ces modules d'assemblage sont symétriques. Les premiers tronçons 54 et les troisièmes tronçons 58 sont parallèles. Toutefois, dans chaque rail de guidage 52, le troisième tronçon 58 est décalé par rapport au premier tronçon ; perpendiculairement au sens de montage 46. Ainsi, les plots 48 qui y sont associés sont décalés l'un par rapport à l'autre. Cette configuration permet de matérialiser un détrompeur. Ceci favorise encore le bon positionnement du support 28 par rapport à l'élément de finition 30.

Selon le sens de montage 46, les deuxièmes tronçons 56 divergent. Ils s'écartent l'un de l'autre. Ceci forme un entonnoir facilitant le positionnement et l'indexage en position des plots 48 associés. Cette configuration favorise la mise en correspondance du support 28 et de l'élément de finition 30. Lors de l'assemblage, un opérateur sent le guidage procuré par l'inclinaison des deuxième tronçon 56.

Selon un mode de réalisation, l'écartement entre les premiers tronçons 54 est inférieur ou égal à la largeur 62 des plots 48 associés aux premiers tronçons 54. La largeur 62 est mesurée sur les faces opposés des plots 48. Ces faces opposées sont tournées vers l'opposé l'une de l'autre. Cet ajustement mécanique permet de générer un effort de frottement naturel lors de l'assemblage. Ce frottement permet à un opérateur de sentir une résistance qui confirme le bon positionnement. Le support 28 et l'élément de finition 30 sont agencés de manière prédéfinie.

L'interface de montage 44 comprend une butée de rétention (non représentée) et une lame élastique 64 configurée de sorte à coopérer avec la butée de rétention, selon le sens de montage. Le premier tronçon 54 est entre le deuxième tronçon 56 et la lame élastique 64. La lame élastique 64 forme une fin de course.

Dans la présente illustration, le plot 48 est formé par le support 28 et le rail de guidage 52 est formé par l'élément de finition 30.

Selon une alternative de l'invention, le plot est formé par l'élément de finition et le rail de guidage est formé par le support.

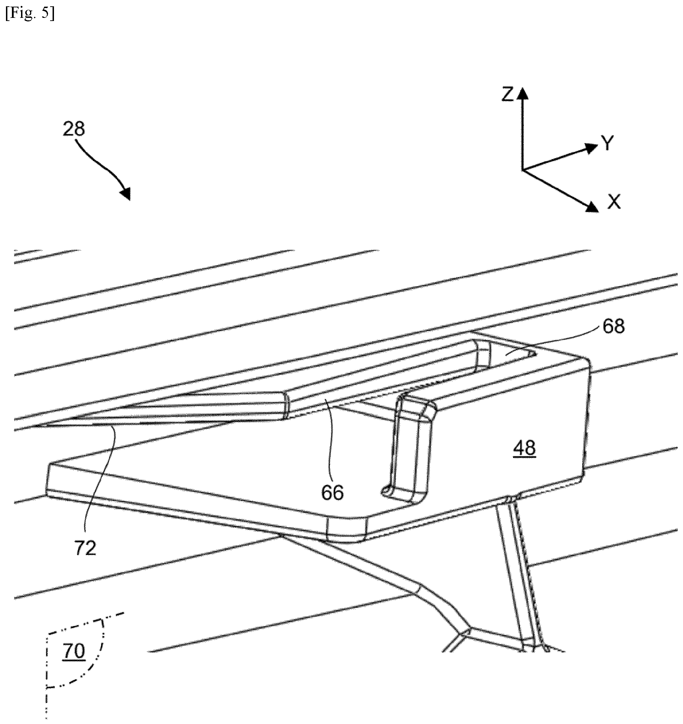

La figure 5 présente un plot 48 d'interface de montage d'un ensemble pour carrosserie de véhicule automobile. Le véhicule automobile peut correspondre à celui présenté en relation avec l'une des figures 1 à 4. Le plot 48 est représentatif d'au moins un ou de chaque plot 48 représenté en figure 4. L'élément de finition n'est pas représenté par soucis de clarté.

Le plot 48 est essentiellement creux. Le plot 48 est ouvert. Le plot 48 comprend une fente d'assemblage 66. La fente d'assemblage 66 comprend un fond 68. Le fond 68 est selon le sens de montage. Le fond 68 est destiné à coopérer avec une extrémité du rail de guidage (non représenté), par exemple une surépaisseur du rail de guidage.

L'élément de finition est généralement plan. Il comprend une plaque. L'élément de finition comprend un plan principal 70. La fente d'assemblage 66 est ouverte parallèlement au plan principal 70. Cette configuration améliore la stabilité de la fixation au niveau de l'interface de montage. Le montage est plus sûr.

Le plot 48 comprend une rampe 72 faisant saillie par rapport au plan principal 70. La rampe 72 fait saillie sur le support 28 vers l'élément de finition. La rampe 72 s'étend jusqu'à la fente d'assemblage 66. La rampe 72 ajoute une autre surface inclinée. Elle est à l'opposé du fond 68.

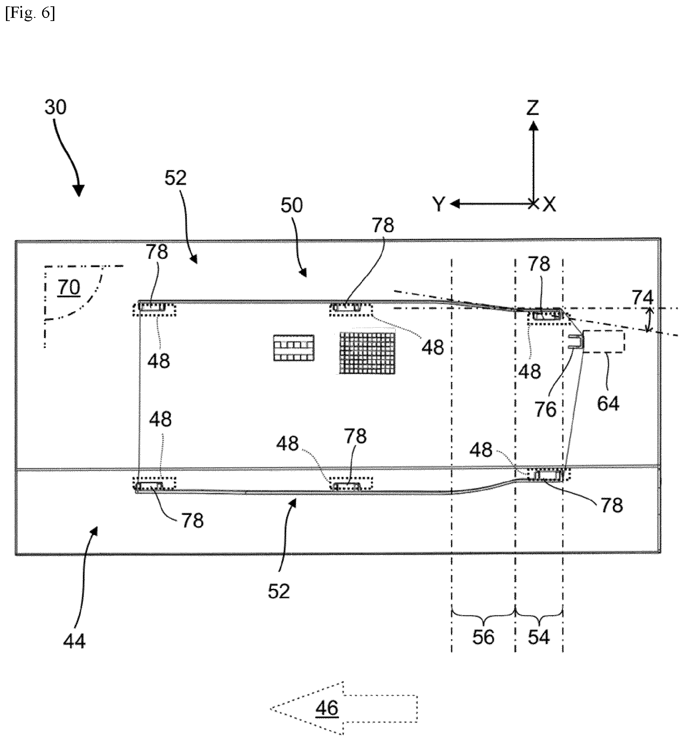

La figure 6 présente un élément de finition 30 d'un ensemble pour carrosserie de véhicule automobile. Le véhicule automobile peut correspondre à celui présenté en relation avec l'une des figures 1 à 5. Des plots 48 du support sont représentés en pointillés en guise de repère.

L'élément de finition 30 forme généralement une plaque. Il présente un plan principal 70, qui est un plan géométrique. Il peut correspondre à un plan moyen. Le plan principal 70 est formé par la plaque. Dans le présent mode de réalisation, la plaque est rectangulaire. Selon une alternative de l'invention, la plaque est ovale, ou selon toute autre géométrie.

Selon une option de l'invention, les rails de guidage 52 sont identiques et symétriques. Par la suite de la description, on se réfèrera à l'un des rails de guidage 52 pour décrire les deux.

Le rail de guidage 52 forme une ligne brisée. Le deuxième tronçon 56 est incliné par rapport au premier tronçon 54 d'un angle d'inclinaison 74. L'angle d'inclinaison 74 est mesuré sur la plaque. Il peut être mesuré dans l'interface de montage 44. L'angle d'inclinaison 74 est mesuré dans le plan principal 70. L'angle d'inclinaison 74 est compris entre 3° et 20° ; préférentiellement compris entre 5° et 10°. Par exemple, L'angle d'inclinaison 74 mesure 9°. Les plages d'angles d'inclinaison 74 présentées ci-dessus apportent un compromis entre le guidage généré et la compacité.

L'interface de montage 44 comprend une butée de rétention 76 et une lame élastique 64 configurée de sorte à coopérer avec la butée de rétention 76, selon le sens de montage 46. Le premier tronçon 54 est entre le deuxième tronçon 56 et la butée de rétention 76.

Les moyens de rétention 50 comprennent au moins une surépaisseur 78 formée sur le premier tronçon 54. La surépaisseur 78 est dans l'une des fentes d'assemblage de plot 48 afin de lier l'élément de finition 30 au support. Dans le présent mode de réalisation, les moyens de rétention 50 comprennent six surépaisseurs 78, chacune associée à l'un des plots 48. Les surépaisseurs 78 sont réparties le long des rails de guidage 52. Elles permettent une fixation tout le long de l'interface de montage 44.

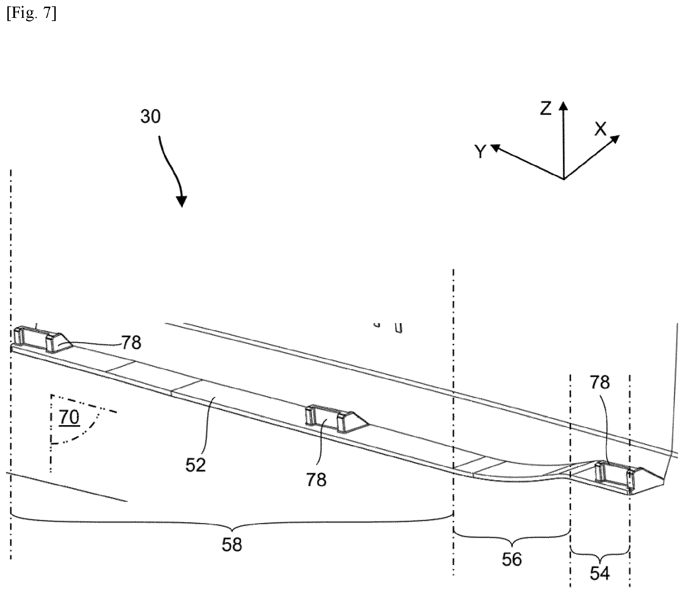

La figure 7 présente un rail de guidage 52 d'un élément de finition 30 d'ensemble pour carrosserie de véhicule automobile. Le véhicule automobile peut correspondre à celui présenté en relation avec l'une des figures 1 à 6.

Les surépaisseur 78 s'étendent verticalement. Une surépaisseur 78 est agencée dans le premier tronçon 54, deux autres dans le troisième tronçon 58. Ces deux autres surépaisseurs 78 sont décalées par rapport à celle associée dans le premier tronçon 54. Le deuxième tronçon 56 est incliné par rapport au premier tronçon 54 et au troisième tronçon 58. Il est généralement courbe.

Le rail de guidage 52 est venu de matière avec l'élément de finition 30. Il peut être produit par moulage. La surépaisseur 78 forme un crochet inséré dans une fente afin d'assurer une rétention, par exemple selon la direction longitudinale. Chaque surépaisseur 78 fait saillie depuis le rail de guidage 52. Elle fait saillie suivant le plan principal 70.

Selon un mode de réalisation préféré, le support et l'élément de finition sont réalisés en au moins un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylène, polyamide, polyphtalamide, polyétherethercétone, polysulfure de phénylène, polyamide-imide, polyétherimide, polyarylamide, polyépoxyde, polyester insaturés, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

Le support et/ou l'élément de finition comprend au moins 10 % en poids de matériau plastique recyclé basé sur le poids total du matériau plastique ; de préférence de 10 à 80% en poids ; plus préférentiellement de 20 à 60% en poids ou de 30 à 40% en poids. L'emploi de matériau plastique recyclé diminue l'empreinte écologique du véhicule.

L'invention comprend la combinaison de tous les modes de réalisation illustrés par toutes les figures.

Les figures 2 à 7 sont des vues isométriques. Elles respectent chacune une échelle spécifique, des angles réels et des proportions réelles.

## Revendications

1. Ensemble (18) pour carrosserie (14) de véhicule automobile (10) ; l'ensemble (18) comprenant : un panneau extérieur (24) avec une découpe (26) ; un support (28) pivotant par rapport au panneau extérieur (24) ; un élément de finition (30) dans la découpe (26) ; une interface de montage (44) de l'élément de finition (30) sur le support (28), l'interface de montage (44) présentant un sens de montage (46) de l'élément de finition (30) sur le support (28), et comprenant un plot (48) avec une fente d'assemblage (66), et des moyens de rétention (50) configurés pour être insérés dans la fente d'assemblage (66) selon le sens de montage (46); **caractérisé en ce que** les moyens de rétention (50) comprennent un rail de guidage (52) avec un premier tronçon (54) s'étendant le long de la fente d'assemblage (66), et un deuxième tronçon (56) s'étendant au-delà du premier tronçon (54) dans le sens de montage (46), le deuxième tronçon (56) étant incliné par rapport au premier tronçon (54) afin de guider les moyens de rétention (50) dans la fente d'assemblage (66) lors du montage.

2. Ensemble (18) selon la revendication 1, **caractérisé en ce que** le deuxième tronçon (56) est incliné par rapport au premier tronçon (54) d'un angle d'inclinaison (74) compris entre 3° et 20° ; préférentiellement, l'angle d'inclinaison (74) est compris entre 5° et 10°.

3. Ensemble (18) selon l'une des revendications 1 à 2, **caractérisé en ce que** l'élément de finition (30) comprend un plan principal (70) ; la fente d'assemblage (66) étant ouverte parallèlement au plan principal (70) et/ou le plot (48) comprend une rampe (72) faisant saillie dans l'interface de montage (44) et s'étendant jusqu'à la fente d'assemblage (66).

4. Ensemble (18) selon l'une des revendications 1 à 3, **caractérisé en ce que** la fente d'assemblage (66) est une première fente d'assemblage ; l'interface de montage (44) comprenant en outre une deuxième fente d'assemblage décalée par rapport à la première fente d'assemblage, transversalement au sens de montage (46).

5. Ensemble (18) selon la revendication 4, **caractérisé en ce que** le rail de guidage (52) comprend un troisième tronçon (58) parallèle au premier tronçon (54) et s'étendant jusqu'à la deuxième fente d'assemblage ; et/ou l'interface de montage (44) comprend en outre une troisième fente d'assemblage alignée par rapport à la première fente d'assemblage selon le sens de montage (46).

6. Ensemble (18) selon l'une des revendications 1 à 5, **caractérisé en ce que** les moyens de rétention (50) comprennent une surépaisseur (78) formée sur le premier tronçon (54), ladite surépaisseur (78) étant dans la fente d'assemblage (66) afin de lier l'élément de finition (30) au support (28).

7. Ensemble (18) selon l'une des revendications 1 à 6, **caractérisé en ce que** transversalement au sens de montage (46), le premier tronçon (54) est entre le deuxième tronçon (56) et la fente d'assemblage (66) ; préférentiellement, le plot (48) est formé par le support (28) et le rail de guidage (52) est formé par l'élément de finition (30).

8. Ensemble (18) selon l'une des revendications 1 à 7, **caractérisé en ce que** le plot (48) et le rail de guidage (52) forment un premier module d'assemblage, l'interface de montage (44) comprenant en outre un deuxième module d'assemblage symétrique au premier module d'assemblage.

9. Véhicule automobile (10) comprenant une carrosserie (14) avec un ensemble (18) ; **caractérisé en ce que** l'ensemble (18) est conforme à l'une des revendications 1 à 8 ; préférentiellement le panneau extérieur (24) forme une peau de pare-chocs (20).

10. Véhicule automobile (10) selon la revendication 9, **caractérisé en ce que** le véhicule automobile (10) comprend une cavité de rechargement (32) recouverte par l'élément de finition (30) ; préférentiellement, la cavité de rechargement (32) comprend une prise électrique et/ou un orifice de remplissage en carburant.

## Patentansprüche

1. Anordnung (18) für eine Karosserie (14) eines Kraftfahrzeugs (10); wobei die Anordnung (18) umfasst: eine äußere Platte (24) mit einem Ausschnitt (26); einen Träger (28), der relativ zu der äußeren Platte (24) schwenkbar ist; ein Abschlusselement (30) in dem Ausschnitt (26); eine Montageschnittstelle (44) für das Abschlusselement (30) an dem Träger (28), wobei die Montageschnittstelle (44) eine Montagerichtung (4) für das Element aufweist Veredelungsmittel (30) auf dem Träger (28), das einen Stift (48) mit einem Verbindungsschlitz (66) und Haltemittel (50) aufweist, die so konfiguriert sind, dass sie in den Verbindungsschlitz (66) in der Montagerichtung (46) eingesetzt werden können; **dadurch gekennzeichnet, dass** die Haltemittel (50) eine Führungsschiene (52) mit einem ersten Abschnitt (54), der sich entlang des Verbindungsschlitzes (66) erstreckt, und einem zweiten Abschnitt (56), der sich über den ersten Abschnitt hinaus erstreckt, umfassen (54) In Montagerichtung (46) ist der zweite Abschnitt (56) gegenüber dem ersten Abschnitt (54) geneigt, um die Haltemittel (50) bei der Montage in den Montageschlitz (66) zu führen.

2. Anordnung (18) nach Anspruch 1, **dadurch gekennzeichnet, dass** der zweite Abschnitt (56) bezüglich des ersten Abschnitts (54) um einen Neigungswinkel (74) zwischen 3° und 20° geneigt ist; vorzugsweise ist der Neigungswinkel (74) zwischen 5° und 10°.

3. Anordnung (18) nach einem der Ansprüche 1 bis 2, **dadurch gekennzeichnet, dass** das Abschlusselement (30) eine Hauptebene (70) umfasst; wobei der Verbindungsschlitz (66) parallel zur Hauptebene (70) offen ist und/oder der Zapfen (48) eine Rampe (72) umfasst, die in die Montageschnittstelle (44) hineinragt und sich bis zum Verbindungsschlitz (66) erstreckt.

4. Anordnung (18) nach einem der Ansprüche 1 bis 3, **dadurch gekennzeichnet, dass** der Verbindungsschlitz (66) ein erster Verbindungsschlitz ist; wobei die Montageschnittstelle (44) ferner einen zweiten Verbindungsschlitz aufweist, der quer zur Montagerichtung (46) gegenüber dem ersten Verbindungsschlitz versetzt ist.

5. Anordnung (18) nach Anspruch 4, **dadurch gekennzeichnet, dass** die Führungsschiene (52) einen dritten Abschnitt (58) aufweist, der parallel zu dem ersten Abschnitt (54) verläuft und sich zu dem zweiten Verbindungsschlitz erstreckt; und/oder dass die Montageschnittstelle (44) ferner einen dritten Verbindungsschlitz aufweist, der in Montagerichtung (46) mit dem ersten Verbindungsschlitz ausgerichtet ist.

6. Anordnung (18) nach einem der Ansprüche 1 bis 5, **dadurch gekennzeichnet, dass** die Haltemittel (50) eine Verdickung (78) aufweisen, die auf dem ersten Abschnitt (54) ausgebildet ist, wobei sich die Verdickung (78) in dem Verbindungsschlitz (66) befindet, um das Abschlusselement (30) mit dem Träger (28) zu verbinden.

7. Anordnung (18) nach einem der Ansprüche 1 bis 6, **dadurch gekennzeichnet, dass** quer zur Montagerichtung (46) der erste Abschnitt (54) zwischen dem zweiten Abschnitt (56) und dem Verbindungsschlitz (66) liegt; vorzugsweise ist der Zapfen (48) durch den Träger (28) und die Führungsschiene (52) durch das Abschlusselement (30) gebildet.

8. Anordnung (18) nach einem der Ansprüche 1 bis 7, **dadurch gekennzeichnet, dass** der Zapfen (48) und die Führungsschiene (52) ein erstes Montagemodul bilden, wobei die Montageschnittstelle (44) außerdem ein zweites Montagemodul umfasst, das zum ersten Montagemodul symmetrisch ist.

9. Kraftfahrzeug (10) mit einer Karosserie (14) mit einer Baugruppe (18); **dadurch gekennzeichnet, dass** die Baugruppe (18) einem der Ansprüche 1 bis 8 entspricht; vorzugsweise bildet die äußere Platte (24) eine Stoßfängerhaut (20).

10. Kraftfahrzeug (10) nach Anspruch 9, **dadurch gekennzeichnet, dass** das Kraftfahrzeug (10) einen Aufladehohlraum (32) aufweist, der von dem Abschlusselement (30) abgedeckt ist; wobei vorzugsweise der Aufladehohlraum (32) eine elektrische Steckdose und/oder eine Kraftstoffeinfüllöffnung aufweist.

## Claims

1. Assembly (18) for motor vehicle bodywork (14) (10); the assembly (18) comprising: an outer panel (24) with a cutout (26); a support (28) pivoting by report to the outer panel (24); a level grade item (30) in the cutout (26); an assembly line interface (44) of the level grade item (30) on the support (28), the assembly line interface (44) having an assembly line direction (46) of the item level grade (30) on the support (28), and comprising a stud (48) with an assembly slot (66), and retention means (50) configured to be inserted into the support the assembly slot (66) along the direction assembly line (46); wherein the retention means (50) comprise a guide rail (52) with a first section (54) extending along the assembly slot (66), and a second section (56) extending beyond the first section (54) in the direction assembly line (46), the second section (56) being inclined by report to the first section (54) in order to guide the retention means (50) in the assembly slot (66) during assembly line.

2. Assembly (18) according to claim 1, wherein the second section (56) is inclined by report to the first section (54) by an angle of inclination (74) of between 3° and 20°; preferably, the angle of inclination (74) is between 5° and 10°.

3. Assembly (18) according to one of Claims 1 to 2, **characterised in that** the level grade item (30) comprises a main drawing (70); the assembly slot (66) being open parallel to the main drawing (70) and/or the stud (48) comprises a ramp (72) projecting into the assembly line interface (44) and extending as far as the assembly slot (66).

4. Assembly (18) according to one of Claims 1 to 3, **characterised in that** the assembly slot (66) is a first assembly slot; the assembly line interface (44) further comprising a second assembly slot offset by report to the first assembly slot, transversely to the assembly line direction (46).

5. Assembly (18) according to claim 4, wherein the guide rail (52) comprises a third section (58) parallel to the first section (54) and extending as far as the second assembly slot; and/or the assembly line interface (44) further comprises a third assembly slot aligned by report with the first assembly slot along the assembly line direction (46).

6. Assembly (18) according to one of Claims 1 to 5, **characterised in that** the retention means (50) comprise an extra thickness (78) formed on the first section (54), said extra thickness (78) being in the assembly slot (66) in order to connect the level grade item (30) to the support (28).

7. Assembly (18) according to one of Claims 1 to 6, **characterised in that** transversely to the direction of the assembly line (46), the first section (54) is between the second section (56) and the assembly slot (66); preferably, the stud (48) is made up of the support (28) and the guide rail (52) is made up of the level grade item (30).

8. Assembly (18) according to one of Claims 1 to 7, wherein the stud (48) and the guide rail (52) form a first assembly module, the assembly line interface (44) further comprising a second assembly module symmetrical to the first assembly module.

9. Motor vehicle (10) comprising a bodywork (14) with an assembly (18); **characterised in that** the assembly (18) conforms to one of Claims 1 to 8; preferably the outer panel (24) forms a bumper skin (20).

10. Motor vehicle (10) according to claim 9, wherein the motor vehicle (10) comprises a recharging cavity (32) covered by the level grade item (30); preferably, the recharging cavity (32) comprises an electrical outlet and/or a fuel filling orifice.
